# EUROPEAN PATENT SPECIFICATION

(11) **EP 0 691 290 B1**
(45) Date of publication and mention of the grant of the patent: **30.09.1998**
(21) Application number: 95201857.0
(22) Date of filing: 06.07.1995
(51) Int. Cl.: B65G 25/06

(54) **Replaceable wear surface for conveyor slats**
Auswechselbare Verschleissfläche für Latten eines Pendelförderers
Surface d'usure détachable pour lattes d'un convoyeur à mouvement alternatif

(30) Priority: 07.07.1994 US 271483; 12.09.1994 US 304404
(43) Date of publication of application: 10.01.1996
(73) Proprietor: Foster, Raymond Keith, Madras Oregon 97741 (US)
(72) Inventor: Foster, Raymond Keith, Madras Oregon 97741 (US)
(74) Representative: Hoijtink, Reinoud

(56) References cited:
- US-A- 4 785 929
- US-A- 5 267 641
- US-A- 5 355 994

## Description

### Technical Field

This invention relates to a reciprocating slat conveyor, comprising a plurality of side-by-side, elongated, longitudinally movable conveyor slats and an elongated wear plate for each conveyor slat secured to the conveyor slat according to the preamble of claim 1. Such a conveyor is known from US-A-5 267 641.

### Background of the Invention

Reciprocating floor conveyors are used in a wide variety of applications wherein the conveyor slats of the reciprocating floor conveyors are subject to a substantial amount of pounding and abuse. For example, garbage-hauling trailers, equipped with reciprocating floor conveyors, are used to haul solid waste material to disposal sites. At garbage dump stations, waste material is dumped into these open-top, garbage-hauling trailers and onto the conveyor slats of the reciprocating floor conveyor, which forms the floor of the trailer. As the waste material is dumped onto the reciprocating floor conveyor, heavy objects, some with sharp or protruding edges, pound and scrape the conveyor slats as the trailer is loaded. In some applications, a compactor compacts the loaded solid waste material downwardly against the conveyor slats, prior to the garbage being hauled to the disposal site. This compaction of the garbage greatly increases the forces that the reciprocating floor conveyor must withstand.

Reciprocating floor conveyors also are used in trailers for transporting fire wood debris comprising large sections of tree trunks and branches. Typically, a garbage truck dumps the wood debris from an elevated position above the trailer, whereby the heavy sections of tree trunks and branches crash down upon the conveyor slats of the reciprocating floor conveyor. As a result, the reciprocating floor conveyors can sustain a substantial amount of damage. Reciprocating floor conveyors are also used in stationary applications to convey scrap metal, tires, wheels, engines, and many other types of bulky waste products. Typically, these waste products, like garbage and wood debris, are dumped or channeled onto reciprocating floor conveyors and transported by the conveyors to a collection site.

Damage to the conveyor slats can result in the conveyor slats not reciprocating properly and in the conveyor slats leaking fluid underneath the conveyor. Solutions to this problem have included manufacturing the conveyor slats out of steel, rather than aluminum, to provide them sufficient strength for handling the impact forces to which reciprocating floor conveyors are subjected. However, the use of steel as a manufacturing material greatly increases the weight of the conveyors, which can be prohibitive for many applications, such as truck-and-trailer vehicles.

Abrasive bulk material not only can cause damage to the top surfaces of the conveyor slats, but can also work its way down into the gaps between adjacent conveyor slats where it can cause damage to seals between the slats and to the bearings and subframework of the reciprocating floor conveyor.

US-A-5 267 641 describes a reciprocating slat conveyor, comprising a plurality of side-by-side, elongated, longitudinally movable conveyor slats. Each conveyor slat has at the top portion an elongated wear plate. This conveyor has the in the previous paragraph described drawback, as the grooves between two slats are uncovered and can receive damaging material.

Accordingly, a principal object of the present invention is to provide an improved design for a reciprocating floor conveyor that is durable, yet lightweight, and avoids the problems discussed above with regard to prior art conveyors.

### Summary of the Invention

The reciprocating floor conveyor of the present invention is characterized in that the wear plates are removably secured to the conveyor slats and that each wear plate includes an elongated body and a cover flange along one side edge of the wear plate, extending upwardly and laterally outwardly from the body of the wear plate, said cover flange being at least of a sufficient width to extend over and cover the ridge on the conveyor slat to which the wear plate is secured.

In certain embodiments of the invention, each ridge has a base with a slot opening towards and confronting the slot in the other ridge on the slat. The side edge portions of the wear plate fit into the slots to restrain the wear plate against sideways and vertical movement relative to the slat. The slots may extend the full length of the slat to permit the wear plate to be installed on the slat by sliding the wear plate along the slots into a use position. Alternatively, or in addition, the slat and wear plate may be constructed so that the wear plate may be snap fit down onto the slat. An example of an embodiment that is amenable to a snap fit arrangement is one in which biasing means is positioned in one of the slots to bias the side edge portion of the wear plate opposite the biasing means into its slot.

In another embodiment of the invention, a first side edge portion of each wear plate is angled upwardly and laterally outwardly and extends above the adjacent ridge. The second side edge portion extends upwardly over the first side edge portion of the wear plate mounted on an adjacent conveyor slat. A seal may be positioned between the second side edge portion of the wear plate and the first side edge portion of the adjacent wear plate. A preferred feature of this embodiment is a second side edge portion of each wear plate that includes a downwardly-angled segment spaced from and confronting the upwardly-angled first side edge portion of an adjacent wear plate, the juxtaposition of the upwardly and downwardly-angled edge portions creating a downwardly-disposed passageway. When both the feature of a seal and the feature of a downwardly-angled segment are provided, the seal may be positioned in the passageway.

### Brief Description of the Drawings

Like reference numerals are used to indicate like parts throughout the various figures of the drawing, wherein:
Fig. 1 is a fragmentary pictorial view of a first embodiment of the replaceable wear plate assembly of the present invention shown mounted to adjacent conveyor slats of a reciprocating floor conveyor, which conveyor slats are each mounted atop pairs of guide beams;
Fig. 2 is a fragmentary exploded pictorial view of a single replaceable wear plate and conveyor slat assembly of Fig. 1;
Fig. 3 is a sectional view of the wear plate assembly and reciprocating floor conveyor of Fig. 1 shown adjacent sidewalls of a cargo container in which the reciprocating floor conveyor is mounted;
Fig. 4 is a fragmentary pictorial view of the replaceable wear plate assembly of Fig. 1 shown secured to conveyor slats that are each mounted on a single guide beam;
Fig. 5 is an exploded pictorial view of the replaceable wear plate assembly of Fig. 4;
Fig. 6 is sectional view of three side-by-side conveyor slats, each having a wear plate secured thereon, according to a second embodiment of the present invention;
Fig. 7 is a sectional, pictorial view of a conveyor slat of Fig. 6;
Figs. 8-11 are a sequence of sectional views illustrating the snap-in process for mounting the wear plate shown in Figs. 6 and 7 onto a conveyor slat;
Fig. 12 is a sectional view of a portion of another embodiment of the reciprocating floor conveyor of the present invention;
Fig. 13 is an enlarged detailed view of the overlay seal and/or a side seal shown in Fig. 12;
Fig. 14 is a detailed, fragmentary view of the overlay seal and/or side seal positioned between either the side edges of adjacent wear plates, or the lower inner edge of a side seal plate and a side edge of an adjacent wear plate; and
Figs. 15A-15B are fragmented sectional views of the reciprocating floor conveyor shown in Fig. 12, including the side seal plates and side seals thereof.

### Best Modes for Carrying out the Invention

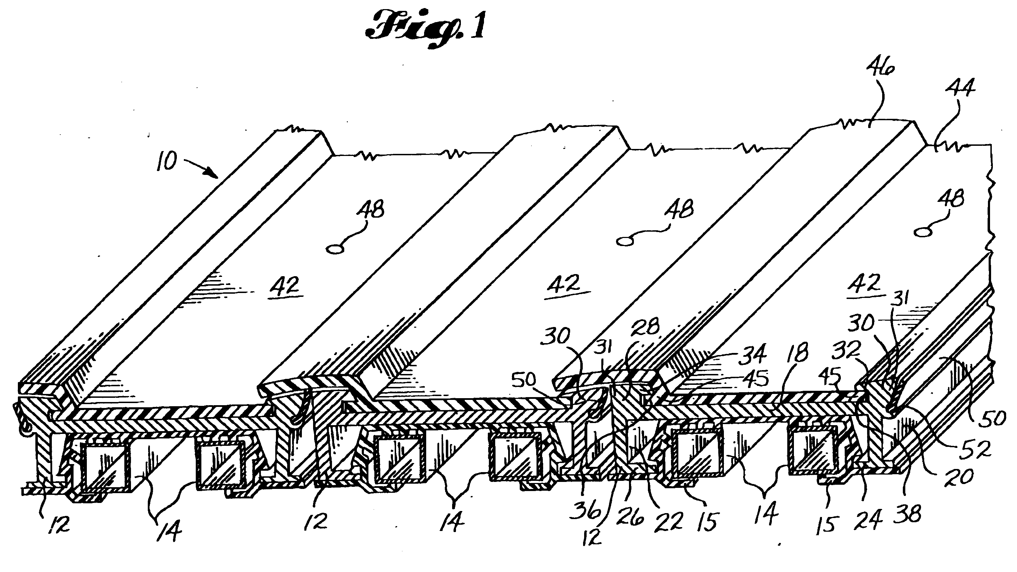

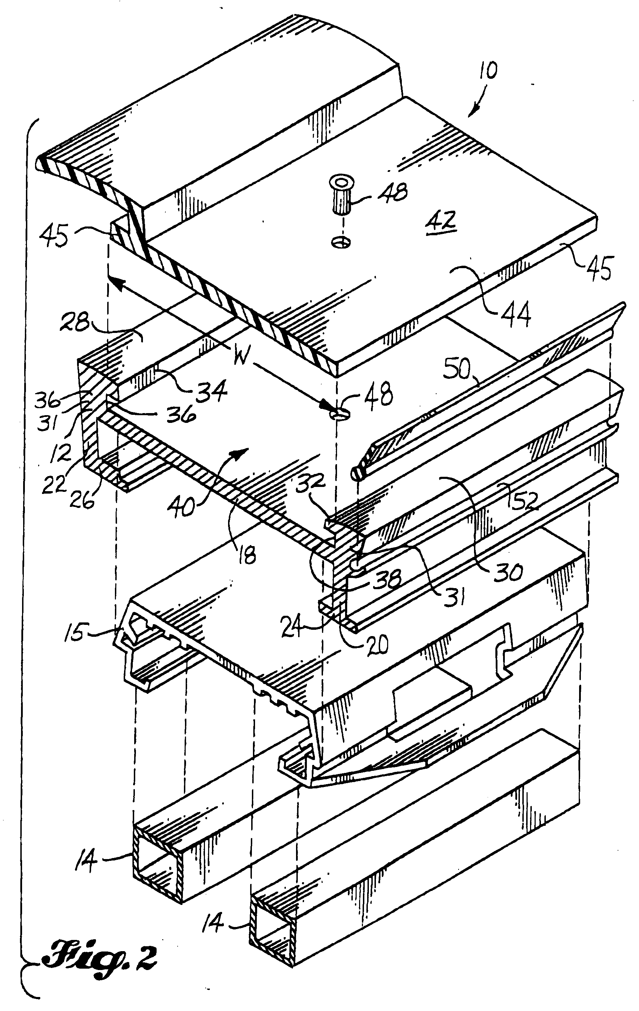

Referring now to the drawings, Fig. 1 shows the replaceable wear plate assembly 10 mounted to floor members or conveyor slats 12 of a reciprocating floor conveyor. Fig. 2 shows an exploded view of a single wear plate and conveyor slat assembly. The conveyor slats 12 and the drive mechanism for moving the conveyor slats are not, per se, a part of the present invention. By way of typical and therefore nonlimitive example, the drive mechanism may be like the drive mechanism disclosed in my U.S. Patent No. 5,125,502, granted June 30, 1992, and entitled, "Drive Mechanism for A Reciprocating Floor Conveyor"; or my U.S. Patent No. 4,821,868, granted April 18, 1989 and entitled, "Drive/Frame Assembly for a Reciprocating Floor."

Figs. 1 and 2 show some of the support framework for the reciprocating conveyor slats 12. The support framework includes longitudinal guide beams 14, which in the embodiment shown in Figs. 1 and 2, comprise two guide beams 14 for each conveyor slat 12. The guide beams 14 are mounted to a plurality of transverse support beams (not shown), which form part of the support framework for the reciprocating floor conveyor. A bearing 15 is snap-fitted onto each pair of guide beams 14. Bearings 15 slidably support the conveyor slats 12 on the guide beams 14. Preferably, bearings 15 are made of a plastic material. The aforementioned patents disclose the bearings 15 and supporting framework in more detail.

Each conveyor slat 12 includes a top portion 18, a pair of sidewall portions 20, 22 extending downwardly from the top portion 18, a pair of bottom flanges 24, 26, which project inwardly from the sidewalls 20, 22, and a pair of laterally-spaced ridges 28, 30, which extend upwardly along the side edges of the conveyor slats 12. Ridges 28, 30 each include a base 31. Lips 32, 34 project laterally inwardly toward each other from base 31. Lips 32, 34 and bases 31 form slots 36, 38, which extend along the full length of the conveyor slats 12. Slots 36, 38 open towards and confront each other. The ridges 28, 30 also define a channel 40 (Fig. 2) along the top portions 18 of conveyor slats 12 for receiving wear plates 42.

Each wear plate 42 includes an elongated flat portion 44 having side edge portions 45. Flat portion 44 is generally rectangular in shape and has a width (W) (Fig. 2) sufficient so that the side edge portions 45 of wear plate 42 fit within slots 36, 38 extending along the sides of the conveyor slat 12. A cover flange 46 extends from adjacent one side of the flat portion 44 of wear plate 42 upwardly and above the ridge 28 extending along one side edge of the conveyor slat 12 and laterally over and above the ridge 30 of an adjoining conveyor slat 12. The wear plates 42 are preferably made of a structural plastic material, such as polyvinyl chloride.

The wear plates 42 are secured to the conveyor slats 12 by a single connector 48. Connectors 48 restrain the wear plates 42 against longitudinal movement relative to the conveyor slats 12. If the application so requires, each wear plate 42 can be secured to its conveyor slat 12 with more than one connector 48. Only one connector is shown in the drawings because, for many applications, a single connector is sufficient to secure each wear plate to a conveyor slat.

The flat portions 44 of wear plates 42 are received within the channels 40 of each conveyor slat 12 with a somewhat loose fit between the wear plate and the conveyor slat. This allows for variances in manufacture as well as for thermal expansion of the various components. As the conveyor slats of the reciprocating floor conveyor are moved back and forth to convey a load along the reciprocating floor conveyor, the conveyor slats have a tendency to buckle or push upwardly. The lips 32, 34 projecting inwardly from the bases 31 of the conveyor slats hold the wear plates 42 down within the channels 40 of the conveyor slats 12 and prevent any tendency of the wear plates to buckle.

The wear plates 42 are restrained laterally and vertically by the conveyor slats 12. The ridges 28, 30 restrict movement of the wear plates 42 laterally and upwardly, while the top portions 18 support the wear plates 42.

To install the wear plates on the conveyor slats, or to replace the wear plates after they have worn out, the connectors are removed and the plates are slid along the length of the conveyor slats until they are free of the slots 36, 38.

Seal strips 50 are provided between the conveyor slats 12 along the upper portion of the conveyor slats adjacent the ridges 28, 30. The seal strips 50 are held in a groove 52, and the upper end of the seal strip 50 bears against the side of an adjacent conveyor slat 12. The seal strips 50 prevent any moisture or small particles from penetrating between the conveyor slats and falling beneath the reciprocating floor conveyor.

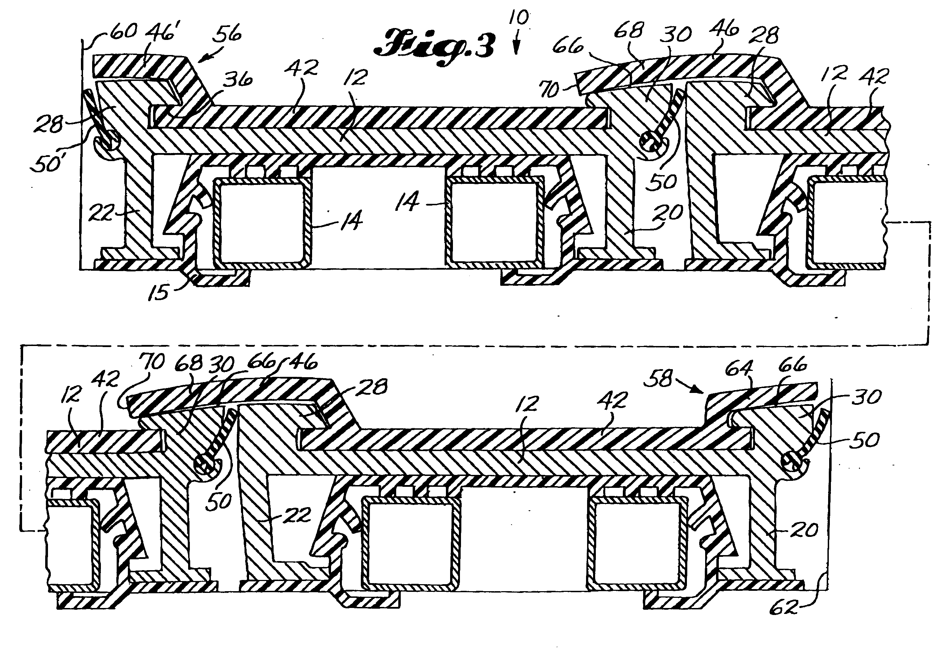

Fig. 3 is a sectional view of the wear plate assembly 10 illustrating the design of the lateral side edges of the assembly, which side edges abut sidewalls of a cargo container. As shown in Fig. 3, the assembly includes a first side edge 56 and a second side edge 58. Side edge 56 abuts a sidewall 60 of the cargo container in which the reciprocating floor conveyor is mounted, and side edge 58 abuts a sidewall 62 of the cargo container. At side edge 56, the cover flange 46′ of the wear plate 42 extends up and over side ridge 28 and stops at the outer edge of ridge 28. A seal 50′ is provided along the outer edge of the conveyor slat 12. Seal 50′ abuts sidewall 60 to create a sealing engagement between the sidewall and the conveyor slat. At the opposite side edge 58 of the assembly, the wear plate 42 adjacent sidewall 62 includes a second cover flange 64 in addition to cover flange 46. Cover flange 64 extends upwardly and laterally outwardly above ridge 30 and stops at the outward edge of ridge 30. Seal 50 is provided along ridge 30 to seal conveyor slat 12 and sidewall 62.

As best shown in Fig. 3, ridges 30 of each conveyor slat 12 include an inwardly-sloping top edge 66. Cover flanges 46 are formed with a corresponding downwardly-sloping outer portion 68. This arrangement brings the outer lateral edge 70 of the cover flanges 46 into closer proximity with the wear plate 42 of an adjoining conveyor slat. As a result, the gap between adjacent wear plates 42 is small and the potential for debris to work its way underneath the cover flange 46 and the ridges 28, 30 is reduced.

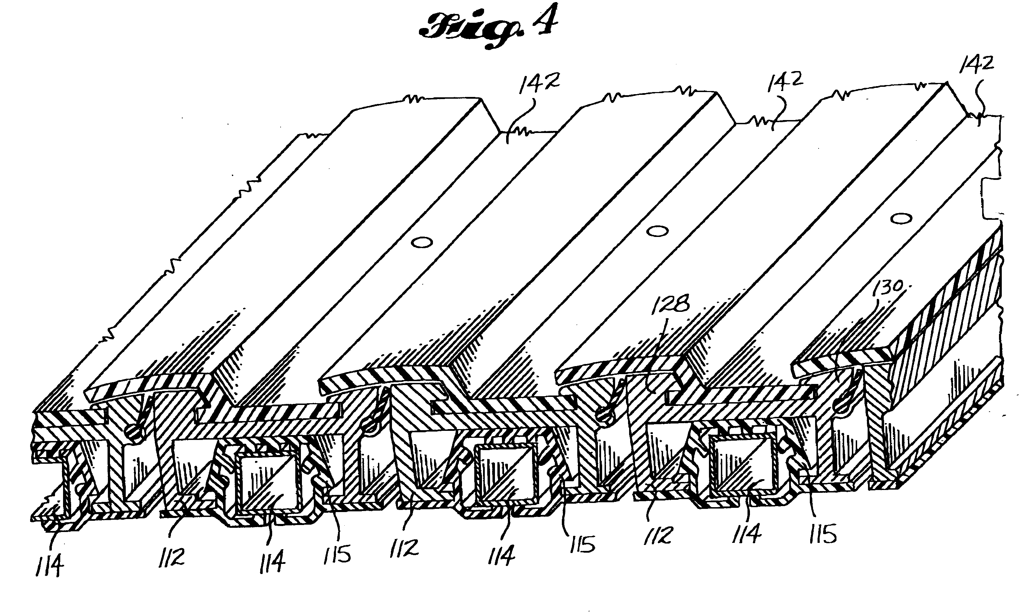

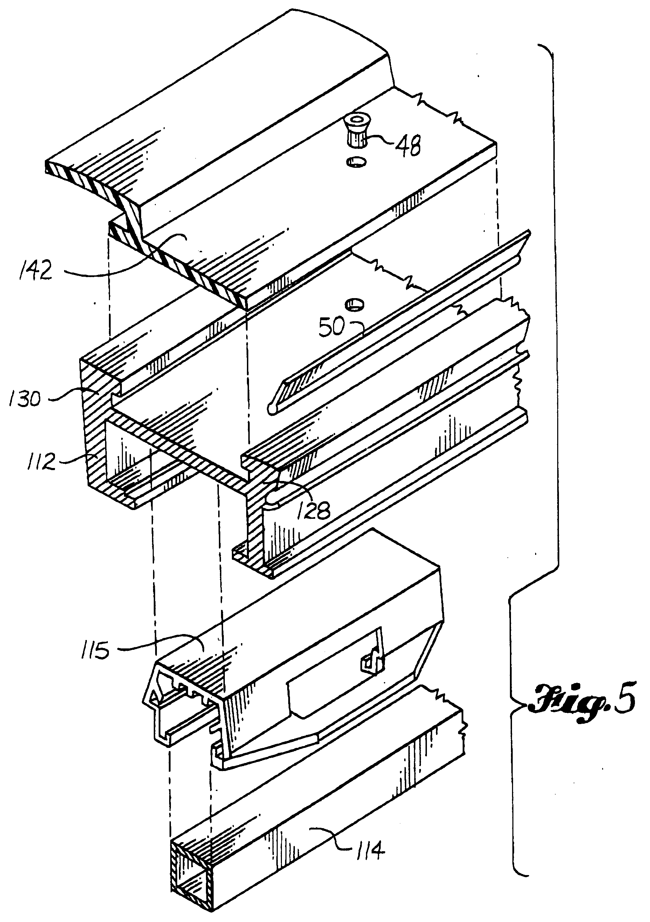

Figs. 4 and 5 show an alternative application for the replaceable wear plates 142. Certain reciprocating floor conveyors are designed with only a single guide beam 114 for supporting each conveyor slat 112. In such an arrangement, the conveyor slats 112 and bearings 115 are typically narrower than the conveyor slats of Figs. 1 and 2. However, the design of the wear plates 142 and the ridges 128, 130 of the conveyor slats 112 are substantially the same.

As can be seen, the wear plates cover the entire surface of the conveyor slats and, thus, provide a protective shield over the slats. The cover flanges of the wear plates cover the seams between adjacent slats and, thus, assist in preventing moisture or debris from getting beneath the conveyor. The wear plates being plastic makes them more receptive to the pounding and abuse that reciprocating floor conveyors are subject to and, being relatively inexpensive, are replaceable when worn at relatively little cost.

It should be noted that there are other designs, as well, for the conveyor slats 12 to which wear plates 42 can be mounted, which designs are well known in the art and used for a variety of reciprocating floor conveyor applications. The replaceable wear plate assembly of the present invention is equally adaptable to other reciprocating floor conveyor designs wherein the conveyor slats are mounted adjacent each other to form the floor of the reciprocating floor conveyor.

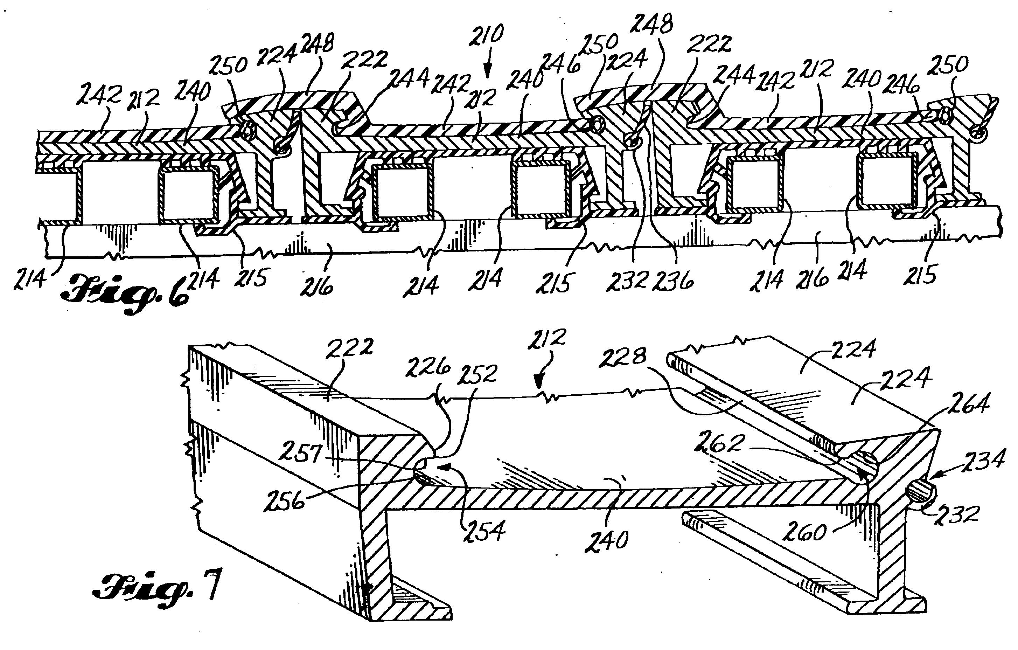

In Fig. 6, a reciprocating floor conveyor 210 constructed in accordance with the present invention is shown in partial section. Conveyor slats are indicated at 212, guide beams are indicated at 214, and bearing brackets are indicated at 215. Guide beams 214 are mounted, as by welding, to cross members 216, which span the lateral width of the reciprocating floor conveyor 210 and form part of the structural framework for the reciprocating floor conveyor. The design of the structural framework for the reciprocating floor conveyor 210, as well as the design of guide beams 214 and bearing brackets 215 do not form a part of the present invention. For further explanation of the design for these components, reference is made to my prior U.S. Patent No. 4,785,929, titled, "Bearing System for Reciprocating Floor Conveyor," granted November 22, 1988.

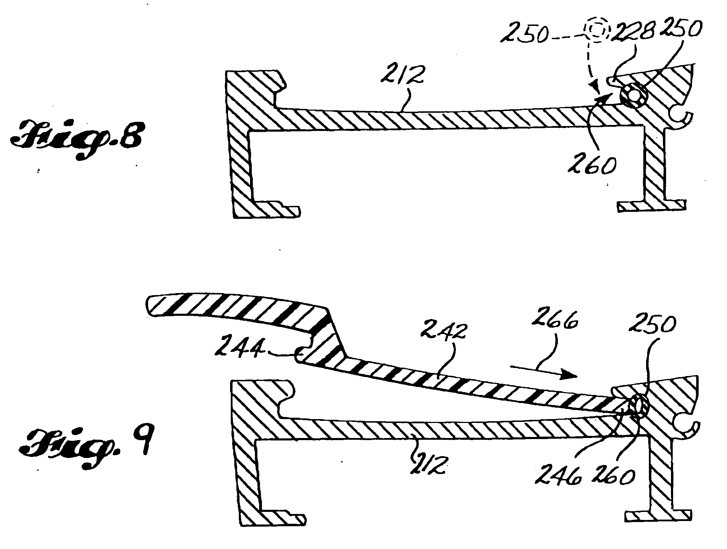

The design of conveyor slats 212 is a slightly modified version of the conveyor slats 12 shown in Figs. 1-5. As shown in Fig. 7, conveyor slats 212 each include a first raised side ridge 222 and a second raised side ridge 224. First side ridge 222 includes an inwardly-projecting lip 226. Second side ridge 224 also includes an inwardly-projecting lip 228. Conveyor slats 212 also include a side ledge 232 forming a groove 234. A seal strip 236 (Fig. 6) is carried in groove 234 and is biased against a side ridge 222 of an adjacent conveyor slat 212.

Conveyor slats 212 include a top portion 240. Wear plates 242 rest on top portions 240 of conveyor slats 212. Wear plates 242 include a first side edge 244 and a second side edge 246. Each wear plate 242 also includes an upwardly and outwardly-projecting flange cover 248. Flange cover 248 extends over side ridge 222 of the conveyor slat 212 on which the wear plate 242 is secured, as well as over the adjacent side ridge 224 of an adjacent conveyor slat 212. A biasing mechanism 250 is positioned between second side edge 246 of wear plate 242 and second side ridge 224. Biasing mechanism 250 is discussed later.

In Fig. 7, it can be seen that lip 226 includes a curved face 252. Lip face 252 defines a slot 254 between side ridge 222 and top portion 240 of conveyor slat 212. Slot 254 shall be referred to as the "snap-in" slot. Snap-in slot 254 includes tapered sides 256, 257.

Lip 228 of ridge 224 defines a partially-circular slot 260, in which the biasing mechanism 250 is positioned. Biasing mechanism 250 comprises an elongated, O-ring tube, preferably made of an elastomeric or otherwise flexible and resilient material. Suitable pneumatic connections are provided at the ends of the O-ring tube 250 for inflating and deflating the tube 250.

In Fig. 6, O-ring tube 250 is shown in a compressed position, compressed by side edge 246 of wear plate 242 into slot 254. As shown, O-ring tube 250 biases side edge 244 of wear plate 242 into snap-in slat 254. Lip 228 overhangs slot 260 so that the lower edge 262 of lip 228 is lower than the upper circular surface 264 of slot 260, thereby forming a constriction in front of slot 260. This ensures that biasing mechanism 250 remains in slot 260 once installed therein.

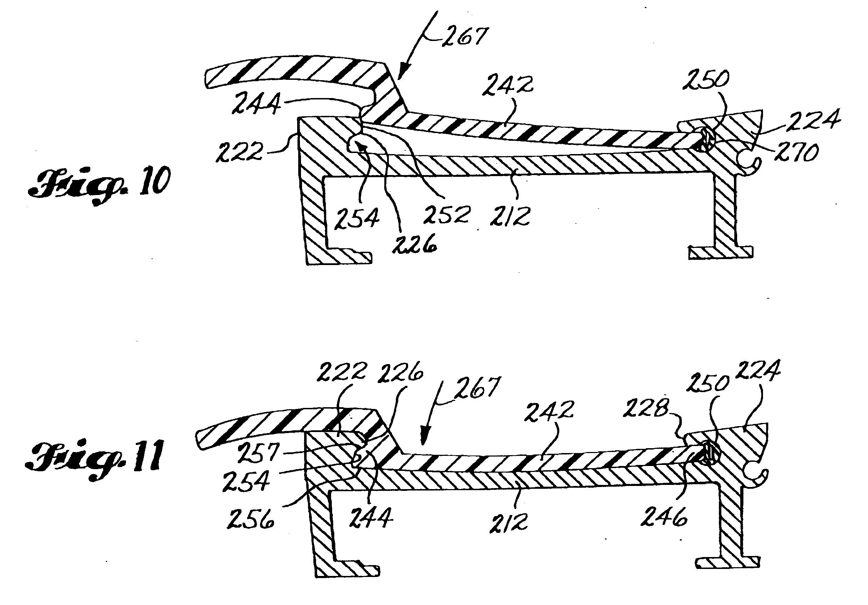

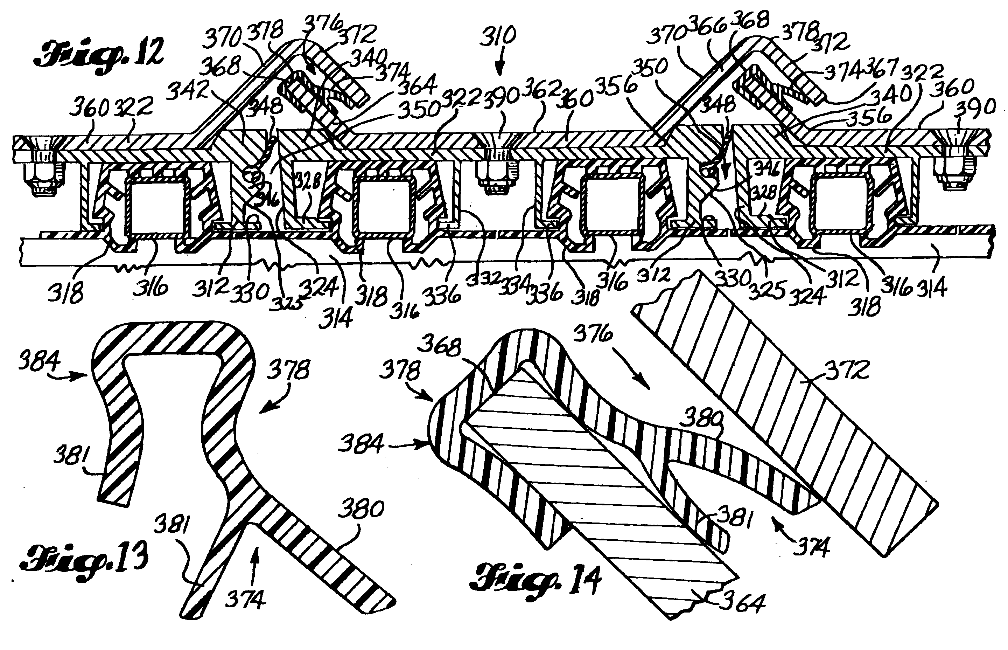

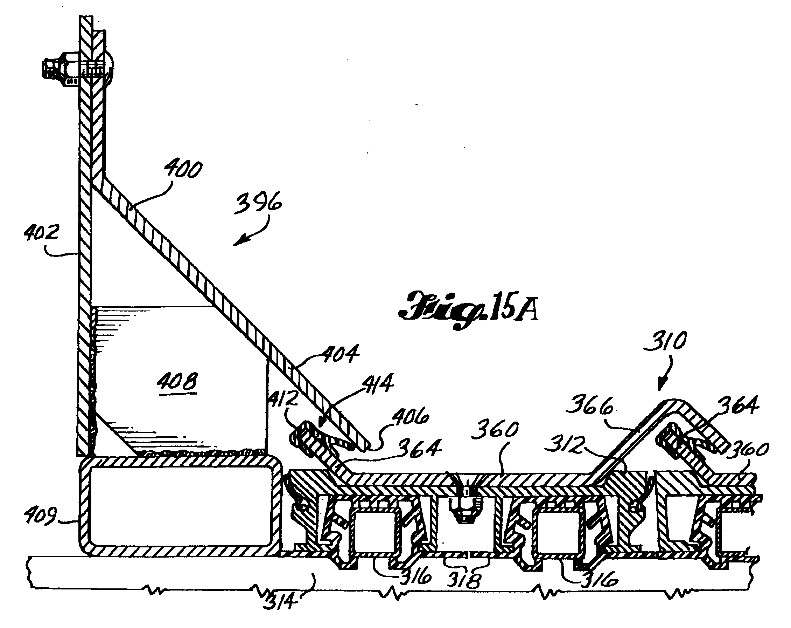

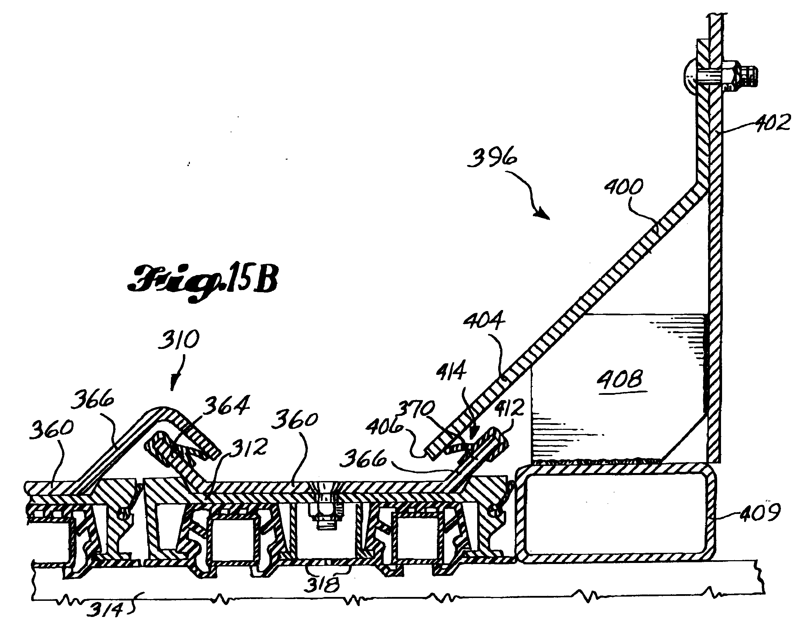

Figs. 8-11 illustrate steps for installing a wear plate 242 onto a conveyor slat 212. In Fig. 8, the wear plate is not illustrated. However, O-ring tube 250 is illustrated first in phantom lines and second in solid lines shown installed in slot 260. Lip 228 secures O-ring tube 250 in slot 260. In Fig. 9, wear plate 242 is shown being installed onto conveyor slat 212. Second side edge 246 of wear plate 242 is inserted into slot 260 until it compresses O-ring tube 250, as indicated by arrow 266. In Fig. 10, first side edge 244 of wear plate 242 is pressed past lip 226 of ridge 222. Side edge 244 is pressed past surface 252 of lip 226, as indicated by arrow 267, until side edge 244 is snapped into slot 254, as shown in Fig. 11.

As shown in Fig. 11, tapered sidewalls 256, 257 of slot 254 receive side edge 244 of wear plate 242 in a friction fit. O-ring tube 250 is inflated so that wear plate 242 is biased laterally toward side ridge 222 of conveyor slat 212. The tapered sides of side edge 244 fit into slot 254 and engage tapered sidewalls 256, 257. This helps keep each wear plate 242 secured to its conveyor slat 212.

Each wear plate 242 has a lateral dimension or width between its side edges 244, 246 that is greater than the distance between inwardly-projecting lips 226, 228. This keeps wear plates 242 held down on the conveyor slats 212. Also, the width of wear plates 242 is less than the distance between lip 226 and sidewall 270 (Fig. 10) of slot 260. This provides sufficient space for wear plate 242 to be pressed downwardly past lip 226 and into slot 254.

The wear plate mounted to one of the outermost conveyor slats includes an additional upwardly and outwardly-directed flange cover similar to cover flange 64 shown in Fig. 3. It is necessary that this flange cover be spaced inwardly from lip 228 a sufficient distance to allow lateral movement of side edge 246 into slot 260.

The design of the conveyor slats and wear plates shown in Figs. 6-11 allows the wear plates to be snap-fitted onto the conveyor slats from above the conveyor slats, rather than having to be inserted into the slots of the conveyor slats from one end thereof. Such a design simplifies installation of the wear plates, both during initial assembly or in a retrofit application.

The tubular design of biasing mechanism 250 replaces the mechanical fasteners shown in Figs. 2, 4, and 5. However, other designs for biasing mechanism 250 are suitable for biasing wear plates 242, the illustrated design being my currently-envisioned preferred embodiment. Other equivalent designs for biasing wear plates 242, which designs allow for easy installation of the wear plates, such as, for example, a spring-loaded mechanism, are considered to be within the scope of the present invention.

In Fig. 12, a section of a reciprocating floor conveyor 310 is shown. Reciprocating floor conveyor 310 includes a plurality of elongated conveyor slats 312. Conveyor slats 312 are mounted on conveyor frame 314 for longitudinal reciprocating movement between "start" and "advanced" positions. My prior U.S. patents Nos. 5,064,052, titled, "Reciprocating Conveyor Floor Members and Seals," granted November 12, 1991; 4,962,848, titled, "Reciprocating Floor Conveyor," granted October 16, 1990; and 4,793,469, titled, "Reduced Size Drive/Frame Assembly for a Reciprocating Floor Conveyor," granted December 27, 1988, disclose suitable structure for the conveyor frame bearings and seals, and the sequence of operation of conveyor slats of a reciprocating floor conveyor.

Elongated, one-inch by one-inch guide beams 316 are mounted on conveyor frame 314, as by welding, and extend the length of conveyor 310, except for a section of conveyor 310 wherein a drive mechanism is attached from beneath to conveyor slats 312. My prior U.S. patents No. 4,712,467, titled, "Combined Linear Hydraulic Motor and Transfer Valve," granted December 15, 1987, and No. 5,373,777, titled, "Linear Hydraulic Motor with Snubber," granted December 20, 1994, disclose a drive mechanism suitable for reciprocating conveyor slats 312. Two guide beams 316 are provided for each conveyor slat 312. A pair of plastic snap-on bearings 318 are mounted on each pair of guide beams 316. Conveyor slats 312, in turn, snap onto bearings 318. My prior U.S. patent No. 4,785,929, titled, "Bearing System for Reciprocating Floor Conveyor," granted November 22, 1988, discloses a similar type of one-piece snap-on plastic bearing.

Each conveyor slat 312 includes a flat, top portion 322 and a pair of downwardly-depending sidewalls 324, 325. Sidewall 324 includes a lower, inwardly-projecting rail 328, and sidewall 325 includes a lower, inwardly-projecting rail 330. Conveyor slats 312 also include a pair of inner, spaced-apart, and downwardly-depending walls 332, 334. Each inner wall 332, 334 includes a lower rail 336. Rails 328, 330, 336, 336 engage bearings 318 and keep conveyor slats 312 clamped down on guide beams 316 as conveyor slats 312 reciprocate longitudinally across the tops of bearings 318.

Sidewalls 325 each include a ledge 346 for holding a conveyor slat seal 348 in position in a gap 350 between sidewalls 324, 325 of adjacent conveyor slats. Seal 348 is held by ledge 346 to sidewall 325 of one conveyor slat 312, and is biased against sidewall 324 of an adjacent conveyor slat. In this manner, seal 348, between adjacent conveyor slats 312, prevents material from getting down into gap 350.

Each conveyor slat 312 includes a pair of raised side ridges 340, 342. Raised ridges 340, 342 of each conveyor slat 312 are spaced from each other and form a channel 356 for receiving an overlay plate 360. Overlay plate 360 includes a relatively flat central portion 362, a first side edge portion 364 and a second side edge portion 366. First side edge portion 364 is angled upwardly from central portion 362 and terminates laterally at a first side edge 368. Accordingly, first side edge 368 is above central portion 362 of overlay plate 360.

Second side edge portion 366 extends upwardly over first side edge portion 364 of an adjacent overlay plate 360 and terminates at a second side edge 367. Second side edge portion 366 includes an initial segment 370 that is angled upwardly past the first side edge 368 of an adjacent overlay plate 360, and an outward, downwardly-angled segment 372 positioned above first side edge portion 364 of adjacent overlay plate 360.

An elastomeric, somewhat U-shaped overlay seal 378, including a forked end 374, is held in the gap or passageway 376 between outward segment 372 and first side edge portion 364 of an adjacent overlay plate 360. As detailed in Figs. 13 and 14, overlay seal 378 includes a first fork segment 380 biased against outward segment 372, and a second fork segment 381 biased against first side edge portion 364 of adjacent overlay plate 360. Overlay seal 378 also includes a U-shaped tail 384 that mounts snugly around first side edge 368 of overlay plate 360. Preferably, overlay seal 378 is secured to first side edge portion 364 by a suitable mechanical fastener, such as a rivet or series of rivets (not shown). Such fasteners may be spaced from each other along the length of an overlay plate 360.

Passageway 376 is formed by the juxtaposition of outward segment 372 of each overlay plate 360 and first side edge portion 364 of an adjacent overlay plate 360. Passageway 376 is a downwardly-disposed passageway that is sealed from the load carried by the conveyor slats by forked section 374 of overlay seal 378.

Referring back to Fig. 12, overlay plates 360 are secured to conveyor slats 312 by means of bolts 390. For many applications, a single bolt 390 can be used to secure an overlay plate 360 to a conveyor slat 312. However, more than one bolt 390 can be used, if necessary.

The design of the overlap arrangement between overlay plates 360 creates a second level of protection for gaps 350 between conveyor slats 312. In order for material to get down between conveyor slats 312 and into gaps 350, it is necessary for the material to work its way past both overlay seals 378 and conveyor slat seals 348. In addition, overlay seal 378 is positioned in a downwardly-disposed passageway 376, which further limits the extent to which material can get through overlay plates 360.

Referring to Figs. 15A-15B, the outward side sections 396 of reciprocating floor conveyor 310 are shown to include a formed side seal plate 400 that is secured to a sidewall 402 of a trailer or container, for example, in which reciprocating floor conveyor 310 is installed. Side seal plates 400 include a downwardly and inwardly-angled section 404 that terminates at a lower inner edge 406. Gussets 408 are provided to support side seal plates 400. Elongated longitudinal box beams 409 are mounted at the corners of the reciprocating floor conveyor 310. Box beams 409 support gussets 408. A side seal 410, similar to conveyor slat seals 348, are provided between the outermost conveyor slat 312 and box beams 409.

Lower inner edges 406 of side seal plates 400 overlie first side edge portion 364 of the left outermost overlay plate 360 and second side edge portion 366 of right outermost overlay plate 360. It should be noted that second side edge portion 366 of outermost overlay plate 360, as detailed in Fig. 15B, only includes an inner upwardly-angled segment 370. A side seal 412 is secured to each side edge portion 364, 366 of outermost overlay plates 360. Side seals 412 are identical in shape to overlay seals 378. Side seals 412 close off gaps or downwardly-disposed passageways 414, which are defined by the juxtaposition of the lower edges 406 of side seal segments 404 and side edge portions 364, 366 of overlay plates 360.

Accordingly, it can be seen that across the width of the reciprocating floor conveyor 310, an additional layer of protection is provided for conveyor slats 312. This additional level of protection includes overlay plates 360, and overlay seals 378 and side seals 412, which seal downwardly-angled passageways defined between the overlay plates and the side seal plates.

Preferably, overlay plates 360 are made of steel, while aluminum is utilized for conveyor slats 312. In addition, steel should be utilized for side seal plates 400.

## Claims

1. A reciprocating slat conveyor, comprising a plurality of side-by-side, elongated, longitudinally movable conveyor slats (12, 212, 312) and an elongated wear plate (42, 242, 360) for each conveyor slat secured to the conveyor slat, wherein each conveyor slat (12, 212, 312) has a top portion (18, 240, 322) that has a pair of laterally-spaced ridges (28, 30; 222, 224; 340, 342), each ridge including a laterally inwardly-directed surface, and the elongated wear plate (42, 242, 360) has a lower surface that rests on the top portion of the conveyor slat, between the ridges, each wear plate extending along at least a portion of the length of the conveyor slat and including opposite side edge portions (45, 244, 246; 364, 366), which confront said laterally inwardly-directed surfaces of the ridges (28, 30; 222, 224; 340, 342) to restrain the wear plates against sideways movement relative to the conveyor slat, **characterized in that** the wear plates are removably secured to the conveyor slats and that each wear plate (42, 242, 360) includes an elongated body and a cover flange (46, 248, 366) along one side edge of the wear plate, extending upwardly and laterally outwardly from the body of the wear plate, said cover flange (46, 248, 366) being at least of a sufficient width to extend over and cover the ridge (28, 222, 342) on the conveyor slat to which the wear plate is secured.

2. A reciprocating slat conveyor according to claim 1, **characterized in that** the cover flange (46, 248, 366) is of sufficient width to extend over and cover both the ridge on the conveyor slat to which the wear plate is secured and an adjacent ridge on an adjoining conveyor slat.

3. A reciprocating slat conveyor according to claim 1, **characterized in that** each ridge (28, 30; 222, 224) has a base with a slot (36, 38; 254, 260) opening towards and confronting the slot (36, 38; 254, 260) in the other ridge on the slat, and said side edge portions (45, 244, 246) of the wear plate (42, 242) fit into the slots to restrain the wear plate against sideways and vertical movement relative to the slat (12, 212).

4. A reciprocating slat conveyor according to claim 3, **charachterized in that** the slots (36, 38; 254, 256) extend the full length of the slat (12, 212) to permit the wear plate (42, 242) to be installed on the slat by sliding the wear plate along the slots into a use position.

5. A reciprocating slat conveyor according to any of claims 1-4, **characterized in that** each wear plate (42, 360) is provided with at least one connector (48, 390), connecting it to its conveyor slat, to restrain the wear plate against longitudinal movement relative to the conveyor slat.

6. A reciprocating slat conveyor according to claim 3, **characterized in that** biasing means (250) for biasing each wear plate (242) laterally are provided so that a side edge portion of the wear plate opposite the biasing means is pressed into its slot and in secureably held therein.

7. The reciprocating slat conveyor of claim 6, **characterized in that** the biasing means comprises an elongated spring (250) positioned within one of the slots (260) of the conveyor slat (212).

8. The reciprocating slat conveyor of claim 7, **characterized in that** the biasing means includes an O-ring tube (250) that is connected to a pressure fluid source so that it can be inflated and deflated to bias the wear plate laterally.

9. The reciprocating slat conveyor of any of claims 6-8, **characterized in that** the slot (254) opposite the biasing means has tapered side walls, and the corresponding side edge portion (244) of the wear plate (242) also includes tapered edges, so that the tapered side walls and edges of the slot and wear plate engage in a friction fit as the biasing means biases the wear plate laterally.

10. A reciprocating slat conveyor according to claim 1, **characterized in that** a first one (364) of said side edge portions of each wear plate (360) is angled upwardly and laterally outwardly and extends above the adjacent ridge (340), and the second side edge portion (366) extends upwardly over the first side edge portion (364) of the wear plate mounted on an adjacent conveyor slat (312).

11. A reciprocating slat conveyor according to claim 10, **characterized in that** a seal (378) between the second side edge portion (366) of each wear plate (360) and the first side edge portion (364) of an adjacent wear plate.

12. The reciprocating slat conveyor of claim 11, **characterized in that** each seal (378) includes a first portion (380) biased against the second side edge portion (366) of a wear plate and a second portion (381) biased against the first side edge portion (364) of an adjacent wear plate.

13. The reciprocating slat conveyor of claim 11 or 12, **characterized in that** each seal (378) is secured to the first side edge portion (364) of wear plate (360).

14. The reciprocating slat conveyor of any of claims 11-13, **characterized in that** the second side edge portion (366) of each wear plate (360) includes a downwardly-angled segment (372) spaced from and confronting the upwardly-angled first side edge portion (364) of an adjacent wear plate, and the juxtaposition of the upwardly and downwardly-angled edge portions creates a downwardly-disposed passageway (376), the seal being positioned in the passageway.

## Patentansprüche

1. Pendel-Lattenförderer, der eine Vielzahl länglicher, Seite an Seite angeordneter, in Längsrichtung verschiebbarer Förderlatten (12, 212, 312) und eine längliche Verschleißplatte (42, 242, 360) für jede Förderlatte aufweist, die an der Förderlatte befestigt ist, wobei jede Förderlatte (12, 212, 312) einen oberen Abschnitt (18, 240, 322) aufweist, der ein Paar seitlich voneinander beabstandete Rippen (28, 30; 222, 224; 340, 342) besitzt, wobei jede Rippe eine seitlich nach innen gerichtete Fläche hat und die längliche Verschleißplatte (42, 242, 360) mit ihrer Unterseite zwischen den Rippen auf dem oberen Abschnitt der Förderlatte ruht, wobei sich jede Verschleißplatte über mindestens einen Teil der Länge der Förderlatte erstreckt und einander gegenüberliegende Seitenkantenabschnitte (45, 244, 246; 364, 366) aufweist, die sich gegenüber den genannten seitlich nach innen gerichteten Flächen der Rippen (28, 30; 222, 224; 340, 342) befinden, um die Verschleißplatten an einer seitlichen Bewegung zu der Förderlatte zu hindern,
**dadurch gekennzeichnet, daß** die Verschleißplatten abnehmbar an den Förderlatten befestigt sind und daß jede Verschleißplatte (42, 242, 360) einen länglichen Körper und entlang einer Seitenkante der Verschleißplatte einen sich nach oben und seitlich von dem Körper der Verschleißplatte weg erstreckenden Abdeckflansch (46, 248, 366) aufweist, wobei der genannte Abdeckflansch (46, 248, 366) zumindest eine ausreichende Breite hat, um sich über die Rippe (28, 222, 342) an der Förderlatte, an der die Verschleißplatte befestigt ist, zu erstrecken und diese abzudecken.

2. Pendel-Lattenförderer nach Anspruch 1,
**dadurch gekennzeichnet, daß** der Abdeckflansch (46, 248, 366) eine ausreichende Breite hat, um sich über die Rippe an der Förderlatte, an der die Verschleißplatte befestigt ist, sowie über eine angrenzende Rippe an einer angrenzenden Förderlatte zu erstrecken und diese abzudecken.

3. Pendel-Lattenförderer nach Anspruch 1,
**dadurch gekennzeichnet, daß** jede Rippe (28, 30; 222, 224) eine Basis mit einer Nut (36, 38; 254, 260) aufweist, die sich zu der Nut (36, 38; 254, 256) in der anderen Rippe der Latte hin öffnet und dieser gegenüberliegt, und daß die genannten Seitenkantenabschnitte (45, 244, 246) der Verschleißplatte (42, 242) in die Nuten passen, so daß die Verschleißplatte gegen seitliches und senkrechtes Verschieben gegenüber der Latte (12, 212) festgehalten wird.

4. Pendel-Lattenförderer nach Anspruch 3,
**dadurch gekennzeichnet, daß** sich die Nuten (36, 38; 254, 256) über die volle Länge der Latte (12, 212) erstrecken, so daß die Verschleißplatte (42, 242) an der Latte eingebaut werden kann, indem die Verschleißplatte entlang der Nuten in eine Gebrauchsposition geschoben wird.

5. Pendel-Lattenförderer nach einem der Ansprüche 1 bis 4,
**dadurch gekennzeichnet, daß** jede Verschleißplatte (42, 360) mit mindestens einem Verbindungsstück (48, 390) versehen ist, das sie mit ihrer Förderlatte verbindet, so daß die Verschleißplatte an einer Längsbewegung relativ zu der Förderlatte gehindert wird.

6. Pendel-Lattenförderer nach Anspruch 3,
**dadurch gekennzeichnet, daß** Vorbelastungsmittel (250) zur seitlichen Vorbelastung jeder Verschleißplatte (242) vorgesehen sind, so daß ein von dem Vorbelastungsmittel abgewandt liegender Seitenkantenabschnitt der Verschleißplatte in seine Nut gedrückt wird und darin festgehalten wird.

7. Pendel-Lattenförderer nach Anspruch 6,
**dadurch gekennzeichnet, daß** das Vorbelastungsmittel aus einer länglichen Feder (250) besteht, die in einer der Nuten (260) der Förderlatte (212) angeordnet ist.

8. Pendel-Lattenförderer nach Anspruch 7,
**dadurch gekennzeichnet, daß** das Vorbelastungsmittel aus einem O-Ring-Schlauch (250) besteht, der mit einer Druckfluidquelle verbunden ist, so daß er aufgeblasen und wieder abgepumpt werden kann, um die Verschleißplatte seitlich vorzubelasten.

9. Pendel-Lattenförderer nach einem der Ansprüche 6 bis 8,
**dadurch gekennzeichnet, daß** die von den Vorbelastungsmitteln abgewandte Nut (254) sich verjüngende Seitenwände aufweist, und der entsprechende Seitenkantenabschnitt (244) der Verschleißplatte (242) ferner sich verjüngende Kanten aufweist, so daß die sich verjüngenden Seitenwände und Kanten der Nut bzw. der Verschleißplatte in Reibpassung miteinander eingreifen, wenn das Vorbelastungsmittel die Verschleißplatte seitlich vorbelastet.

10. Pendel-Lattenförderer nach Anspruch 1,
**dadurch gekennzeichnet, daß** ein erster (364) der genannten Seitenkantenabschnitte jeder Verschleißplatte (360) in einem Winkel nach oben und seitwärts nach außen gerichtet ist und sich über die angrenzende Rippe (340) erstreckt, und der zweite Seitenkantenabschnitt (366) sich nach oben über den ersten Seitenkantenabschnitt (364) der an der angrenzenden Förderlatte (212) eingebauten Verschleißplatte erstreckt.

11. Pendel-Lattenförderer nach Anspruch 10,
**dadurch gekennzeichnet, daß** sich eine Abdichtung (378) zwischen dem zweiten Seitenkantenabschnitt (366) jeder Verschleißplatte (360) und dem ersten Seitenkantenabschnitt (364) einer angrenzenden Verschleißplatte befindet.

12. Pendel-Lattenförderer nach Anspruch 11,
**dadurch gekennzeichnet, daß** jede Abdichtung (378) einen ersten Abschnitt (380), der gegen den zweiten Seitenkantenabschnitt (366) einer Verschleißplatte vorbelastet wird, und einen zweiten Abschnitt (381), der gegen den ersten Seitenkantenabschnitt (364) einer angrenzenden Verschleißplatte vorbelastet wird, aufweist.

13. Pendel-Lattenförderer nach Anspruch 11 oder 12,
**dadurch gekennzeichnet, daß** jede Abdichtung (378) an dem ersten Seitenkantenabschnitt (364) der Verschleißplatte (360) befestigt ist.

14. Pendel-Lattenförderer nach einem der Ansprüche 11 bis 13,
**dadurch gekennzeichnet, daß** der zweite Seitenkantenabschnitt (366) jeder Verschleißplatte (360) ein in einem Winkel nach unten gerichtetes Segment (372) aufweist, das sich in Abstand und gegenüber dem ersten Seitenkantenabschnitt (364) einer angrenzenden Verschleißplatte befindet, und durch Nebeneinanderlegen der in einem Winkel nach oben und nach unten gerichteten Kantenabschnitte ein nach unten gerichteter Durchgang (376) entsteht, wobei die Abdichtung in dem Durchgang angeordnet ist.

## Revendications

1. Convoyeur à lattes à va-et-vient, comprenant une pluralité de lattes de convoyeur mobiles de manière longitudinale, allongées, adjacentes (12, 212, 312) et une plaque d'usure allongée (42, 242, 360) pour chaque latte de convoyeur fixée à la latte de convoyeur, dans lequel chaque latte de convoyeur (12, 212, 312) comporte une partie de dessus (18, 240, 322) qui possède un couple de nervures espacées de manière latérale (28, 30 ; 222, 224 ; 340, 342), chaque nervure comprenant une surface dirigée vers l'intérieur de manière latérale, et la plaque d'usure allongée (42, 242, 360) a une surface inférieure qui reste sur la partie de dessus de la latte de convoyeur, entre les nervures, chaque plaque d'usure s'étendant le long d'au moins une partie de la longueur de la latte de convoyeur et comprenant des parties de bords latéraux opposés (45, 244, 246 ; 364, 366), qui font face auxdites surfaces dirigées vers l'intérieur de manière latérale des nervures (28, 30 ; 222, 224 ; 340, 342) pour maîtriser le mouvement latéral des plaques d'usure par rapport à la latte de convoyeur, caractérisé en ce que les plaques d'usure sont fixées de manière amovible aux lattes de convoyeur et en ce que chaque plaque d'usure (42, 242, 360) comprend un corps allongé et une bride de couverture (46, 248, 366) le long d'un bord latéral particulier de la plaque d'usure, s'étendant vers le haut et vers l'extérieur de manière latérale à partir du corps de la plaque d'usure, ladite bride de couverture (46, 248, 366) étant au moins d'une largeur suffisante pour s'étendre au-dessus et recouvrir la nervure (28, 222, 342) sur la latte de convoyeur à laquelle la plaque d'usure est fixée.

2. Convoyeur à lattes à va-et-vient selon la revendication 1, caractérisé en ce que la bride de couverture (46, 248, 366) est d'une largeur suffisante pour s'étendre au-dessus et recouvrir à la fois la nervure sur la latte de convoyeur à laquelle la plaque d'usure est fixée et une nervure adjacente sur une latte de convoyeur contiguë.

3. Convoyeur à lattes à va-et-vient selon la revendication 1, caractérisé en ce que chaque nervure (28, 30 ; 222, 224) comporte une base munie d'une fente (36, 38 ; 254, 260) s'ouvrant vers et faisant face à la fente (36, 38 ; 254, 260) dans l'autre nervure sur la latte, et lesdites parties de bords latéraux (45, 244, 246) de la plaque d'usure (42, 242) s'ajustent dans les fentes pour maîtriser le mouvement latéral et vertical de la plaque d'usure par rapport à la latte (12, 212).

4. Convoyeur à lattes à va-et-vient selon la revendication 3, caractérisé en ce que les fentes (36, 38 ; 254, 256) s'étendent sur toute la longueur de la latte (12, 212) pour permettre à la plaque d'usure (42, 242) d'être installée sur la latte en coulissant la plaque d'usure le long des fentes dans une position d'utilisation.

5. Convoyeur à lattes à va-et-vient selon l'une quelconque des revendications 1 à 4, caractérisé en ce que chaque plaque d'usure (42, 360) est munie d'au moins un connecteur (48, 390), la reliant à sa latte de convoyeur, pour maîtriser le mouvement longitudinal de la plaque d'usure par rapport à la latte de convoyeur.

6. Convoyeur à lattes à va-et-vient selon la revendication 3, caractérisé en ce que des moyens de poussée (250) pour pousser chaque plaque d'usure (242) de manière latérale sont prévus de sorte qu'une partie de bord latéral de la plaque d'usure opposée aux moyens de poussée est pressée dans sa fente et est maintenue de manière sûre en son sein.

7. Convoyeur à lattes à va-et-vient selon la revendication 6, caractérisé en ce que les moyens de poussée comprennent un ressort allongé (250) positionné à l'intérieur d'une des fentes (260) de la latte de convoyeur (212).

8. Convoyeur à lattes à va-et-vient selon la revendication 7, caractérisé en ce que les moyens de poussée comprennent un tube à joint torique (250) qui est relié à une source de fluide sous pression de sorte qu'il peut être gonflé et dégonflé pour pousser la plaque d'usure de manière latérale.

9. Convoyeur à lattes à va-et-vient selon l'une quelconque des revendications 6 à 8, caractérisé en ce que la fente (254) opposée aux moyens de poussée a des parois latérales allant en s'amincissant, et la partie de bord latéral correspondante (244) de la plaque d'usure (242) comprend également des bords allant en s'amincissant, de sorte que les parois latérales allant en s'amincissant et les bords de la fente et de la plaque d'usure se mettent en prise dans un ajustement de friction lorsque les moyens de poussée poussent la plaque d'usure de manière latérale.

10. Convoyeur à lattes à va-et-vient selon la revendication 1, caractérisé en ce qu'une première partie (364) desdites parties de bords latéraux de chaque plaque d'usure (360) est inclinée vers le haut et vers l'extérieur de manière latérale et s'étend au-dessus de la nervure adjacente (340), et la seconde partie de bord latéral (366) s'étend vers le haut au-dessus de la première partie de bord latéral (364) de la plaque d'usure montée sur une latte de convoyeur adjacente (312).

11. Convoyeur à lattes à va-et-vient selon la revendication 10, caractérisé en ce qu'il y a un joint (378) entre la seconde partie de bord latéral (366) de chaque plaque d'usure (360) et la première partie de bord latéral (364) d'une plaque d'usure adjacente.

12. Convoyeur à lattes à va-et-vient selon la revendication 11, caractérisé en ce que chaque joint (378) comprend une première partie (380) poussée contre la seconde partie de bord latéral (366) d'une plaque d'usure et une seconde partie (381) poussée contre la première partie de bord latéral (364) d'une plaque d'usure adjacente.

13. Convoyeur à lattes à va-et-vient selon la revendication 11 ou 12, caractérisé en ce que chaque joint (378) est fixé à la première partie de bord latéral (364) de la plaque d'usure (360).

14. Convoyeur à lattes à va-et-vient selon l'une quelconque des revendications 11 à 13, caractérisé en ce que la seconde partie de bord latéral (366) de chaque plaque d'usure (360) comprend un segment incliné vers le bas (372) espacé et faisant face à la première partie de bord latéral inclinée vers le haut (364) d'une plaque d'usure adjacente, et la juxtaposition des parties de bords inclinées vers le haut et vers le bas crée une voie de passage disposée vers le bas (376), le joint étant positionné dans la voie de passage.
